# EUROPÄISCHE PATENTSCHRIFT

(11) **EP 3 314 168 B1**
(45) Veröffentlichungstag und Bekanntmachung des Hinweises auf die Patenterteilung: **13.03.2019**
(21) Anmeldenummer: 16739409.7
(22) Anmeldetag: 24.06.2016
(51) Int. Cl.: F24D 3/10

(54) **MODULARER FLUIDVERTEILER FÜR EIN HEIZ- UND/ODER KÜHLSYSTEM**
MODULAR FLUID DISTRIBUTOR FOR A HEATING AND/OR COOLING SYSTEM
DISTRIBUTEUR DE FLUIDE MODULAIRE POUR SYSTÈME DE CHAUFFAGE ET/OU DE REFROIDISSEMENT

(30) Priorität: 25.06.2015 DE 202015103337 U; 22.12.2015 DE 202015106992 U
(43) Veröffentlichungstag der Anmeldung: 02.05.2018
(73) Patentinhaber: REHAU AG + Co, 95111 Rehau (DE)
(72) Erfinder: KOCH, Klaus Paul, 90513 Zirndorf (DE); BAUR-DÜRR, Stephan, 91085 Weisendorf (DE); KRÖBER, Carsten, 90768 Fürth (DE); SEESER, Jessica, 90475 Nürnberg (DE)
(86) Internationale Anmeldenummer: PCT/EP2016/001079
(87) Internationale Veröffentlichungsnummer: WO 2016/206812

(56) Entgegenhaltungen:
- EP-A2- 1 533 575
- WO-A1-2008/154921
- DE-A1- 2 731 819
- DE-U1- 9 412 852

## Beschreibung

Die vorliegende Erfindung betrifft einen modularen Fluidverteiler für ein Heiz- und/oder Kühlsystem, der mindestens zwei Verteilersegmente sowie zwei Abschlusselemente umfasst, wobei die Verteilersegmente jeweils einen fluiddichten Segmentkörper umfassen, der einen Durchflusskanal zum Durchströmen eines Wärmeträgermediums und zwei einander gegenüberliegende Kanalöffnungen aufweist, wobei der Segmentkörper im Bereich der Kanalöffnungen Verbindungselemente zur Erzeugung einer Verbindung zwischen zwei Verteilersegmenten oder zwischen einem Verteilersegment und einem Abschlusselement umfasst.

Derartige modulare Fluidverteiler für Heiz- und/oder Kühlsysteme sind beispielsweise aus der WO 1999/01701 A1, der DE 94 12 852 U1, der DE 27 31 819 A1, der WO 2008/154921 A1 und der EP 1 533 575 A2 bekannt. Der in der WO 1999/01701 A1 beschriebene modulare Fluidverteiler ist aus zueinander identischen Verteilersegmenten aufgebaut, wobei jedes Verteilersegment an einem Ende eines Durchflusskanals zum Durchströmen des Wärmeträgermediums ein Innengewinde und am genüberliegenden Ende des Durchflusskanals ein mit dem Innengewinde eines weiteren Verteilersegments kooperierendes Außengewinde aufweist. Nachteilig an einem derartigen modularen Fluidverteiler wird gesehen, dass dieser keine Mittel vorsieht, die ein ungewolltes Lösen der entsprechenden Gewindeverbindung zwischen zwei Verteilersegmenten verhindern. Um diesen Nachteil auszuräumen, werden im Stand der Technik nicht mit dem Verteilersegment verbundene Sicherungselemente eingesetzt, die während des Konfektionierungsprozesses zur Sicherung der Gewindeverbindung an den modularen Fluidverteiler angebracht werden. Zum einen führt dies zu einem aufwändigen Konfektionierungsprozess. Zum anderen können derartige lose Sicherungselemente während des Transports des modularen Fluidverteilers oder unter den rauhen Bedingungen auf der Baustelle beim Verlegen des Heiz- und/oder Kühlsystems verloren gehen.

Dementsprechend liegt der vorliegenden Erfindung die Aufgabe zugrunde, einen modularen Fluidverteiler für ein Heiz- und/oder Kühlsystem zur Verfügung zu stellen, der die Nachteile des Stands der Technik überwindet. Insbesondere soll bei dem erfindungsgemäßen modularen Fluidverteiler für ein Heiz- und/oder Kühlsystem nach dem Zusammenbau der einzelnen Verteilersegmente ein unabsichtliches Lösen der Verbindungen zwischen den Verteilersegmenten ausgeschlossen sein. Darüber hinaus soll der erfindungsgemäße modulare Fluidverteiler leicht zu konfektionieren sein und gegenüber den rauhen Bedingungen während des Transports und auf der Baustelle unempfindlich sein.

Diese und andere Aufgaben werden durch einen modularen Fluidverteiler für ein Heiz- und/oder Kühlsystem mit den Merkmalen des Anspruchs 1 gelöst. Bevorzugte Ausführungsformen des erfindungsgemäßen modularen Fluidverteilers für ein Heiz- und/oder Kühlsystem sind in den abhängigen Ansprüchen beschrieben.

Gemäß der vorliegenden Erfindung wird vorgeschlagen, Sicherungselemente, die zur Sicherung der Verbindung zwischen den Verteilersegmenten in dem erfindungsgemäßen modularen Fluidverteiler dienen, fest an den Bauteilen des erfindungsgemäßen modularen Fluidverteilers anzubringen, d. h. diese Sicherungselemente zu integralen Bestandteilen der Verteilersegmente zu machen. Hierzu ist es erfindungsgemäß vorgesehen, dass die einzelnen Verteilersegmente im Bereich eines Verbindungselements ein Sicherungselement aufweisen, das mit einem entsprechenden Aufnahmeelement im Bereich des anderen Verbindungselements eines anderen Verteilersegments reversibel in Eingriff bringbar ist, vorzugsweise verrastet.

Dementsprechend liegt die vorliegende Erfindung in der Bereitstellung eines modularen Fluidverteilers für ein Heiz- und/oder Kühlsystem, der mindestens zwei Verteilersegmente sowie zwei Abschlusselemente umfasst, wobei die Verteilersegmente jeweils einen fluiddichten Segmentkörper umfassen, der einen Durchflusskanal zum Durchströmen eines Wärmeträgermediums und zwei einander gegenüberliegende Kanalöffnungen aufweist, wobei der Segmentkörper im Bereich der Kanalöffnungen Verbindungselemente zur Erzeugung einer Verbindung zwischen zwei Verteilersegmenten oder zwischen einem Verteilersegment und einem Abschlusselement umfasst, wobei die Verteilersegmente im Bereich des Verbindungselements mindestens ein Sicherungselement aufweisen, das mit einem Aufnahmeelement im Bereich des anderen Verbindungselements eines anderen Verteilersegments reversibel in Eingriff bringbar ist, wobei das Aufnahmeelement als Federelement, insbesondere als Federzunge, ausgebildet ist.

Erfindungsgemäß sind Sicherungselement(e) und Aufnahmeelement(e) eines Verteilersegments und/oder Abschlusselements, die zur Sicherung der Verbindung dienen, von den Verbindungselementen, die die Verbindung zwischen Verteilersegmenten oder zwischen einem Verteilersegment und einem Abschlusselement bilden, separate Bauteile bzw. sind davon zu unterscheiden.

Hinsichtlich des erfindungsgemäßen modularen Fluidverteilers für ein Heiz- und/oder Kühlsystem kann es sich als günstig erweisen, wenn das Sicherungselement als Rastelement ausgebildet ist, das mit einer entsprechenden Rastaufnahme eines anderen Verteilersegments reversibel in Eingriff bringbar ist, insbesondere reversibel verrastbar ist. Eine derartige Rastverbindung stellt eine einfache und stabile Sicherungsart für die Sicherung der Verbindung zwischen zwei Verteilersegmenten bzw. einem Verteilersegment und einem Abschlusselement dar. Darüber hinaus können entsprechende Rastelemente und Rastaufnahmen leicht und stabil an den jeweiligen Segmentkörper angeformt werden.

Hinsichtlich der Verbindung zwischen zwei Verteilersegmenten sowie zwischen einem Verteilersegment und einem Abschlusselement ist es bevorzugt, dass die jeweilige Verbindung als Bajonettverbindung ausgestaltet ist. Eine derartige Bajonettverbindung hat den Vorteil, dass die beiden Verteilersegmente über eine geringe Drehbewegung, beispielsweise eine Achteldrehung (45°) oder eine Vierteldrehung (90°), miteinander verbunden werden können, während bei einer Gewindeverbindung zum Teil mehrere Volldrehungen für ein Verbinden der Verteilersegmente erforderlich sind. Alternativ dazu kann es sich dabei aber auch um eine Gewindeverbindung, eine Rastverbindung, eine Steckverbindung oder ähnliches handeln.

Erfindungsgemäß ist das Aufnahmeelement als Federelement, insbesondere als Federzunge, ausgebildet. Dies fördert die Reversibilität der Sicherungsverbindung weiter.

Um ein einfaches Schließen der Sicherungsverbindung zu ermöglichen, kann es bevorzugt sein, wenn das Aufnahmeelement mit einer Einführungsschräge versehen ist. Dabei ist es von besonderem Nutzen, wenn sich am Aufnahmeelement an die Einführungsschräge ein Sperrelement anschließt, das bevorzugt als Rücksprung ausgebildet ist. Auf diese Weise wird ein ungewolltes Öffnen der Schraubverbindung zwischen zwei Verteilersegmenten besonders wirksam und mit einfachen Mitteln unterbunden.

Es kann sich auch als hilfreich herausstellen, wenn das Verteilersegment zwei Sicherungselemente umfasst, die einander vorzugsweise entlang des Außenumfangs des Verteilersegments diametral gegenüber liegen. Dies ermöglicht eine Verbindung zwischen zwei Verteilersegmenten in zwei Orientierungen. Dadurch wird es möglich, dass Rohre in zwei einander entgegengesetzte Richtungen aus dem erfindungsgemäßen modularen Fluidverteiler herausgeführt werden (beispielsweise in den Keller einerseits und in obere Stockwerke andererseits). Dabei ist es besonders bevorzugt, wenn das Verteilersegment zwei Aufnahmeelemente umfasst, die einander vorzugsweise entlang des Außenumfangs des Verteilersegments diametral gegenüber liegen und jeweils mit den einander diametral gegenüber liegenden Sicherungselementen eines anderen Verteilersegment in Eingriff bringbar sind bzw. wenn das Verteilersegment zwei Sicherungselemente umfasst, die einander vorzugsweise entlang des Außenumfangs des Verteilersegments diametral gegenüber liegen und jeweils mit den einander diametral gegenüber liegenden Aufnahmeelementen eines benachbarten Verteilersegments in Eingriff bringbar sind. Einerseits ermöglicht dies wiederum eine Verbindung zwischen zwei Verteilersegmenten in zwei Orientierungen und gewährleistet anderseits, dass auch bei Beschädigung einer Sicherungsverbindung ein zufälliges Lösen der Verbindung zwischen zwei Verteilersegmenten verhindert wird.

Gemäß der vorliegenden Erfindung ist es bevorzugt, Sicherungselemente und Aufnahmeelemente, die zur Sicherung der Verbindung zwischen den Verteilersegmenten in dem erfindungsgemäßen modularen Fluidverteiler dienen, fest an den Bauteilen des erfindungsgemäßen modularen Fluidverteilers anzubringen, d. h. diese Sicherungselemente zu integralen Bestandteilen der Segmentkörper der Verteilersegmente zu machen. Hierzu ist es erfindungsgemäß vorgesehen, dass die einzelnen Verteilersegmente im Bereich eines Verbindungselements ein am Segmentkörper betätigbares Aufnahmeelement aufweisen, das mit einem entsprechenden Sicherungselement im Bereich des komplementären Verbindungselements eines benachbarten Verteilersegments reversibel in Eingriff bringbar ist, vorzugsweise verrastbar ist. Dieses Merkmal der vorliegenden Erfindung kann als Merkmal für einen weiteren unabhängigen Patentanspruch herangezogen werden. Demgemäß ist es erfindungsgemäß bevorzugt, wenn das Aufnahmeelement am Segmentkörper betätigbar ausgebildet ist. Dadurch soll gewährleistet werden, dass ein unabsichtliches Lösen der Verbindungen zwischen den Verteilersegmenten ausgeschlossen ist.

Es kann auch von Nutzen sein, wenn das Aufnahmeelement über ein an der Außenseite des Segmentkörpers angeordnetes Betätigungselement betätigbar ist, wobei das Betätigungselement über ein Abdeckelement verdeckbar ist, das mit dem Segmentkörper in Eingriff bringbar, vorzugsweise aufsteckbar oder verrastbar, ist. Bei einer derartigen Ausgestaltung ist das Betätigungselement leicht zugänglich und die Verbindung zwischen zwei Verteilersegmenten ist ohne großen Aufwand lösbar. Weiter wird der unmittelbare Zugang zum Betätigungselement versperrt und dadurch die Wahrscheinlichkeit eines unabsichtlichen Lösens der Verbindung zwischen zwei benachbarten Verteilersegmenten weiter verringert. Dabei ist es besonders bevorzugt, wenn sich das Abdeckelement in axialer Richtung über die gesamte Länge des Segmentkörpers erstreckt. Dadurch entsteht am erfindungsgemäßen modularen Fluidverteiler eine sich über dessen gesamte Länge in axialer Richtung erstreckende Leiste als zusätzliches Designelement.

Zur Herstellung der Verteilersegmente und der Abschlusselemente des erfindungsgemäßen modularen Fluidverteilers hat sich Spritzguß als bevorzugte Art der Herstellung erwiesen. Polyvinylchlorid (PVC), Polyethylen (insbesondere HDPE), Polyamid (PA; insbesondere Polyamid-6 und Polyamid-6,6) und Polypropylen (insbesondere statistisches Polypropylen PP-R) sowie Blends der genannten Polymermaterialien dienen als bevorzugte Materialien für die Verteilersegmente und die Abschlusselemente des erfindungsgemäßen modularen Fluidverteilers, wobei jeweils auch faserverstärkte, insbesondere glasfaserverstärkte Ausführungen der genannten Polymermaterialien und Blends zum Einsatz kommen können.

Der erfindungsgemäße modulare Fluidverteiler sowie einzelne Teile davon, insbesondere Verteilersegmente, Segmentkörper, Abschlusselemente usw., können auch zeilenweise oder schichtweise unter Verwendung eines zeilenaufbauenden oder schichtaufbauenden Fertigungsverfahrens (z. B. 3D-Druck) hergestellt werden.

Im Folgenden wird die vorliegende Erfindung unter Bezugnahme auf die in den Figuren gezeigten Ausführungsformen der vorliegenden Erfindung im Detail erläutert. Dabei zeigen
- Fig. 1: eine perspektivische Ansicht einer Ausführungsform eines erfindungsgemäßen modularen Fluidverteilers für ein Heiz- und/oder Kühlsystem;
- Fig. 2a: eine perspektivische Ansicht eines Verteilersegments des in Fig. 1 gezeigten modularen Fluidverteilers;
- Fig. 2b: eine perspektivische Ansicht des in Fig. 1 gezeigten Verteilersegments von der Rückseite;
- Fig. 3a: eine perspektivische Ansicht zweier in Fig. 1 gezeigter Verteilersegmente während des Erzeugens einer Verbindung zwischen zwei Verteilersegmenten; und
- Fig. 3b: eine perspektivische Ansicht zweier in Fig. 3a gezeigter, miteinander verbundener Verteilersegmente.
- Fig. 4: eine perspektivische Ansicht einer weiteren Ausführungsform eines erfindungsgemäßen modularen Fluidverteilers für ein Heiz- und/oder Kühlsystem; und
- Fig. 5: eine perspektivische Ansicht eines Verteilersegments des in Fig. 4 gezeigten modularen Fluidverteilers, der in einen Aufnahmebereich einer geeigneten Wandhalterung aufgenommen ist.

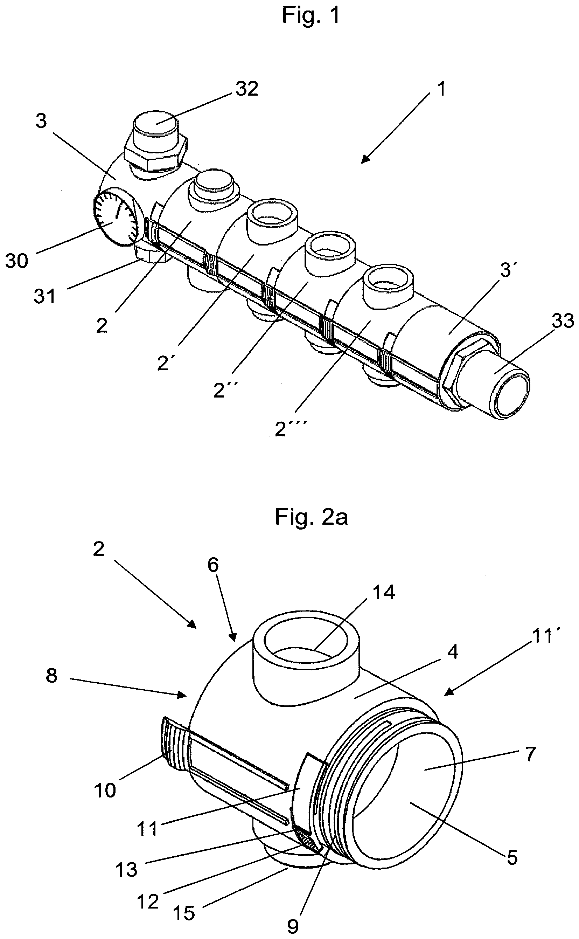

In Fig. 1 ist eine Ausführungsform eines erfindungsgemäßen modularen Fluidverteilers 1 für ein Heiz- und/oder Kühlsystem in einer perspektivischen Ansicht gezeigt. Der erfindungsgemäße modulare Fluidverteiler 1 für ein Heiz- und/oder Kühlsystem ist in der dargestellten Ausführungsform aus vier miteinander verbundenen, untereinander identischen Verteilersegmenten 2, 2', 2", 2"' sowie zwei Abschlusselementen 3, 3' aufgebaut. Selbstverständlich können in dem erfindungsgemäßen modularen Fluidverteiler 1 auch mehr oder weniger als vier Verteilersegmente 2, 2', 2", 2'", beispielsweise zwei, drei, fünf, sechs, sieben usw., vorhanden sein. An den beiden Enden der miteinander verbundenen Verteilersegmente 2, 2', 2", 2"' sind die beiden Abschlusselemente 3, 3' über eine Bajonettverbindung angeschlossen, wobei auch andere Verbindungsarten wie eine Schraubverbindung, eine Rastverbindung, eine Steckverbindung o.ä. eingesetzt werden können.

Das Abschlusselement 3 weist vorzugsweise ein Thermometer 30 zur Messung und Anzeige der Temperatur eines Wärmeträgermediums, das durch den erfindungsgemäßen modularen Fluidverteiler 1 strömt, eine erste Öffnung 31, die mittels eines nicht dargestellten Kugelhahns verschlossen ist und über die die Befüllung und Entleerung der an den erfindungsgemäßen modularen Fluidverteiler 1 angeschlossen Heiz- und/oder Kühlkreise erfolgt, sowie eine zweite Öffnung 32, über die ein Entlüften erfolgen kann. An der den Verteilersegmenten 2, 2', 2", 2"' gegenüberliegenden Seite ist das Abschlusselement 3 verschlossen. Zum Verteilersegment 2 hin weist das Abschlusselement 3 eine Fluidöffnung auf, die vom männlichen Element der Bajonettverbindung umgeben ist, über den das Abschlusselement 3 mit einem kooperierenden weiblichen Element der Bajonettverbindung zum Verteilersegment 2 verbunden ist.

Das andere Abschlusselement 3' ist ebenfalls über eine entsprechende Bajonettverbindung mit dem Verteilersegment 2'" verbunden, die über einen männlichen Element der Bajonettverbindung am Verteilersegment 2'" mit einem kooperierenden weiblichen Element am Abschlusselements 3' geschlossen ist. Auch für diese Verbindung können auch andere Verbindungsarten wie eine Schraubverbindung, eine Rastverbindung, eine Steckverbindung o.ä. zum Einsatz kommen. An der zum Verteilersegment 2'" gerichteten Seite weist das Abschlusselement 3 eine Fluidöffnung auf, während sich an der gegenüberliegenden Seite ein Anschlusselement 33, insbesondere ein Gewindeanschluss oder ein Steckbereich zur Bildung einer Schiebehülsenverbindung, zum Anschließen des erfindungsgemäßen modularen Fluidverteilers 1 an die Hauptleitung befindet.

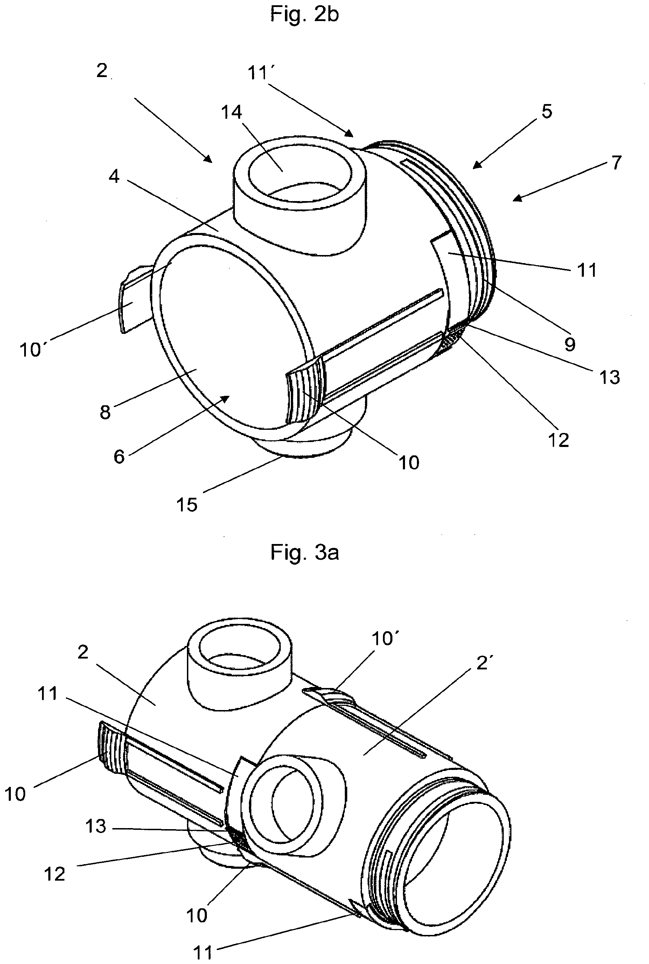

Exemplarisch für die Verteilersegmente 2, 2', 2", 2"' ist in Fig. 2a das Verteilersegment 2 einzeln in einer perspektivischen Darstellung gezeigt. Das Verteilersegment 2 umfasst einen fluiddichten Segmentkörper 4. Im Inneren des Segmentkörpers 4 befindet sich ein Durchflusskanal 5 zum Durchströmen des Wärmeträgermediums. An beiden Enden in Richtung des Durchflusskanals 5 befinden sich zwei einander gegenüberliegende Kanalöffnungen 6, 7, die jeweils von einem Verbindungselement 8, 9 umgeben sind. Dabei ist die Kanalöffnung 6 von einem weiblichen Element 8 (vgl. Fig. 2b) einer Bajonettverbindung umgeben, während die gegenüberliegende Kanalöffnung 7 von einem männlichen Element 9 der Bajonettverbindung umgeben ist. Aufgrund der Identität zweier benachbarter Verteilersegmente 2, 2', 2", 2"' in dem erfindungsgemäßen modularen Fluidverteiler 1 wird mittels weiblichem Element 8 und männlichem Element 9 benachbarter Verteilersegmente 2, 2', 2", 2"' eine Bajonettverbindung zwischen zwei Verteilersegmenten 2, 2', 2", 2'" gebildet. Darüber hinaus ermöglichen die weiblichen und männlichen Elemente 8, 9 den Anschluss der beiden Abschlusselemente 3, 3', die kooperierende männliche und weibliche Elemente zur Ausbildung einer entsprechenden Bajonettverbindung aufweisen, an die Verteilersegmente 2, 2"'. Die Bajonettverbindungen können jeweils durch ein mindestens Dichtungselement abgedichtet sein.

Im Bereich des weiblichen Elements 8 sind an der Außenseite des Segmentkörpers 4 zwei einander diametral gegenüber liegende Sicherungselemente 10, 10' angeformt, wie insbesondere aus Fig. 2b hervorgeht, in der das in Fig. 1 gezeigte Verteilersegment 2 in einer perspektivischen Rückseitenansicht gezeigt ist. In der dargestellten Ausführungsform sind die Sicherungselemente 10, 10' als Rastelemente 10, 10' ausgebildet. An der gegenüber liegenden Seite des Segmentkörpers 4 sind sich an das männliche Element 9 anschließend zwei als Rastaufnahmen 11, 11' ausgebildete Aufnahmeelemente 11, 11' einstückig an den Segmentkörper 4 angeformt. Die Rastaufnahmen 11, 11' sind an den Segmentkörper 4 angeformte, flexible Federzungen 11, 11', deren freies Ende jeweils eine Einführungsschräge 12 aufweist. An die Einführungsschräge 12 schließt sich an der Rastaufnahme 11 in Richtung auf den Segmentkörper 4 jeweils ein bevorzugt als Rücksprung 13 ausgebildetes Sperrelement 13 an. Die Rastaufnahme 11' ist identisch zur Rastaufnahme 11 aufgebaut.

Orthogonal zum Durchflusskanal 5 weist der Segmentkörper 4 zwei weitere, einander gegenüberliegenden Öffnungen 14, 15 auf, wobei die Öffnung 14 zur dichtenden Aufnahme eines Ventils oder eines Durchflussmessers, insbesondere über eine Steck- oder Schraubverbindung, dient, während die Öffnung 15 zum Anschluss des Rohres eines Heiz- und/oder Kühlkreises dient. Der Rohranschluss an das Verteilersegment 2 erfolgt vorzugsweise über eine Steck-, Schraub-, Press- oder Schiebehülsenverbindung.

Zur Herstellung der Verteilersegmente 2, 2', 2", 2'" und der Abschlusselemente 3, 3', des erfindungsgemäßen modularen Fluidverteilers hat sich Spritzgießen als bevorzugte Art der Herstellung erwiesen. Polyvinylchlorid (PVC), Polyethylen (insbesondere HDPE), Polyamid (PA; insbesondere Polyamid-6 und Polyamid-6,6) und Polypropylen (insbesondere statistisches Polypropylen PP-R) dienen als bevorzugte Materialien für die Verteilersegmente 2, 2', 2", 2'" und die Abschlusselemente 3, 3' des erfindungsgemäßen modularen Fluidverteilers 1. Die männlichen und/oder weiblichen Verbindungselemente 8, 9 können als metallische Einleger insbesondere aus Rotguss oder Edelstahl in die entsprechenden Spritgussformen eingelegt werden. In der dargestellten Ausführungsform sind die Segmentkörper 4 sowie die Abschlusselemente 3, 3' aus Polyamid-6 spritzgegossen, während die jeweiligen männlichen und/oder weiblichen Verbindungselemente 8, 9 aus Rotguss sind.

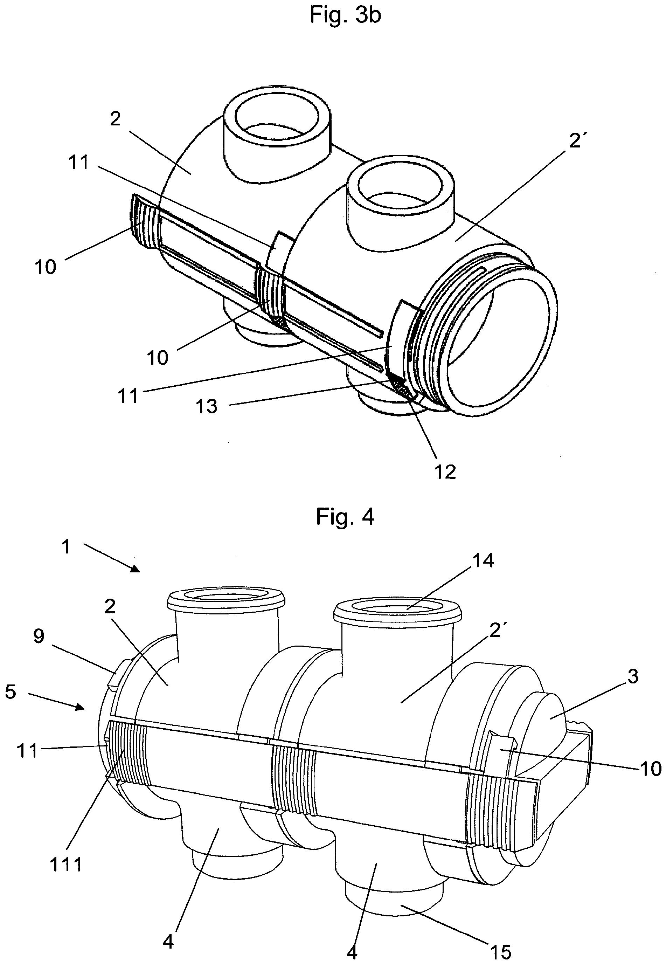

Das Schließen der Bajonettverbindung zwischen zwei Verteilersegmenten 2, 2' ist in den Fig. 3a und 3b veranschaulicht. Dabei zeigt zunächst Fig. 3a eine perspektivische Ansicht zweier gezeigter Verteilersegmente 2, 2' während des Schließens der Bajonettverbindung. Dabei wird zunächst das männliche Element 9 eines Verteilersegments 2 in die Nähe des weiblichen Elements 9 eines anderen Verteilersegments 2' gebracht, bis das männliche Element 9 des Verteilersegments 2 in das weibliche Element 9 des Verteilersegments 2' eindringt. Dann werden die beiden Verteilersegmente 2, 2' gegeneinander verdreht. Dabei gelangt das Rastelement 10 des Verteilersegments 2' an die Einführungsschräge 12 der Federzunge 11 des anderen Verteilersegments 2. Bei weiterem Verdrehen läuft das Rastelement 10 entlang der Einführungsschräge 12 der Federzunge 11 und drückt diese nach unten, bis das Rastelement 10 die Einführungsschräge 12 überwunden hat und mit der Rastaufnahme 11 verrastet. Gleichzeitig verdrehen sich das männliche Element 9 des Verteilersegments 2 und das weibliche Element 8 des anderen Verteilersegments 2' gegeneinader, wodurch die Bajonettverbindung zwischen den beiden Verteilersegmente 2, 2' geschlossen wird. Nach dem Verrasten gelangt das als Federzunge 11 ausgebildete Aufnahmeelement 11 aufgrund seiner Federwirkung in seine Ausgangsposition zurück, so dass das als Rücksprung 13 ausgebildete Sperrelement 13 ein Zurückdrehen der beiden Verteilersegmenten 2, 2' gegeneinander in entgegengesetzter Richtung verhindert. Ein entsprechender Vorgang läuft an der gegenüberliegenden Seite zwischen dem Rastelement 10' des Verteilersegments 2' und der Federzunge 11 des anderen Verteilersegments 2 ab. Die beiden miteinander fest verbundenen Verteilersegmente 2, 2' sind in Fig. 3b dargestellt.

Zum Lösen der Bajonettverbindung zwischen den Verteilersegmenten 2, 2' werden die beiden Federzungen 11, 11' des Verteilersegments 2 nach unten gedrückt und die beiden Verteilersegmente 2, 2' in entgegengesetzter Richtung gegeneinander verdreht. Daraufhin können die Verteilersegmenten 2, 2' voneinander gelöst werden.

In entsprechender Weise können die Abschlusselemente 3, 3' an die Verteilersegmente 2, 2' angefügt oder von diesen gelöst werden.

Fig. 4 zeigt einen modularer Fluidverteiler 1 für ein Heiz- und/oder Kühlsystem gemäß einer weiteren Ausführungsform der vorliegenden Erfindung in einer perspektivischen Ansicht. Der erfindungsgemäße modulare Fluidverteilers 1 für ein Heiz- und/oder Kühlsystem zeigt in der dargestellten Ausführungsform zwei miteinander verbundene, untereinander identische Verteilersegmente 2, 2'. Selbstverständlich können in dem erfindungsgemäßen modularen Fluidverteiler 1 auch mehr als zwei Verteilersegmente 2, 2', beispielsweise drei, vier, fünf, sechs, sieben usw., vorhanden sein. Am Ende des Verteilersegments 2' ist ein Abschlusselement 3 über eine Bajonettverbindung angeschlossen, wobei auch andere Verbindungsarten wie eine Schraubverbindung, eine Rastverbindung, eine Steckverbindung o.ä. eingesetzt werden können. Bevorzugt sind die offenen Enden der endständigen Verteilersegmente 2, 2' mit Abschlusselementen 3 verschlossen.

Bevorzugt weist ein Abschlusselement 3 ein Thermometer zur Messung und Anzeige der Temperatur eines Wärmeträgermediums, das durch den erfindungsgemäßen modularen Fluidverteiler 1 strömt, eine erste Öffnung, die beispielsweise mittels eines Kugelhahns verschlossen ist und über die die Befüllung und Entleerung der an den erfindungsgemäßen modularen Fluidverteiler 1 angeschlossen Heiz- und/oder Kühlkreise erfolgt, sowie eine zweite Öffnung, über die ein Entlüften erfolgen kann. An der den Verteilersegmenten 2, 2' gegenüberliegenden Seite ist das Abschlusselement 3 verschlossen. Zum Verteilersegment 2' hin weist das Abschlusselement 3 eine Fluidöffnung auf, die von einem männlichen Element der Bajonettverbindung umgeben ist, über das das Abschlusselement 3 mit einem kooperierenden weiblichen Element der Bajonettverbindung an das Verteilersegment 2' angebunden ist.

Das zweite Abschlusselement (nicht dargestellt) ist an dem dem ersten Abschlusselement 3 gegenüberliegenden Ende des erfindungsgemäßen modularen Fluidverteilers 1 angeordnet und ist ebenfalls über eine entsprechende Bajonettverbindung mit dem letzten Verteilersegment 2' verbunden, die über ein männliches Element der Bajonettverbindung am Verteilersegment 2' mit einem kooperierenden weiblichen Element am zweiten Abschlusselement geschlossen ist. Auch für diese Verbindung können auch andere Verbindungsarten wie eine Schraubverbindung, eine Rastverbindung, eine Steckverbindung o.ä. zum Einsatz kommen. An der zum Verteilersegment 2' gerichteten Seite weist das Abschlusselement eine Fluidöffnung auf, während sich an der gegenüberliegenden Seite ein Anschlusselement, insbesondere ein Gewindeanschluss oder ein Anschlussbereich zur Bildung einer Schiebehülsenverbindung, zum Anschließen des erfindungsgemäßen modularen Fluidverteilers 1 an die Hauptleitung befinden kann.

Die Verteilersegmente 2, 2' umfassen jeweils einen fluiddichten Segmentkörper 4. Im Inneren des Segmentkörpers 4 befindet sich ein Durchflusskanal 5 mit vorzugsweise im Wesentlichen kreisförmigem Querschnitt zum Durchströmen des Wärmeträgermediums. An beiden Enden in Längsrichtung des Durchflusskanals 5 befinden sich zwei einander gegenüberliegende Kanalöffnungen, die jeweils von einem Verbindungselement 9 umgeben sind. Dabei ist eine der Kanalöffnungen in der in Fig. 4 gezeigten Ausführungsform von einem weiblichen Element einer Bajonettverbindung umgeben, während die gegenüberliegende Kanalöffnung von einem männlichen Element 9 der Bajonettverbindung umgeben ist. Aufgrund der Identität zweier benachbarter Verteilersegmente 2, 2' in dem erfindungsgemäßen modularen Fluidverteiler 1 wird mittels weiblichem Element und männlichem Element 9 benachbarter Verteilersegmente 2, 2' eine Bajonettverbindung zwischen den beiden zwei Verteilersegmenten 2, 2' gebildet. Darüber hinaus ermöglichen die weiblichen und männlichen Elemente den Anschluss der beiden Abschlusselemente 3, die kooperierende männliche oder weibliche Elemente zur Ausbildung einer entsprechenden Bajonettverbindung aufweisen, an die Verteilersegmente 2, 2'. Die Bajonettverbindungen können jeweils durch mindestens ein Dichtungselement abgedichtet sein.

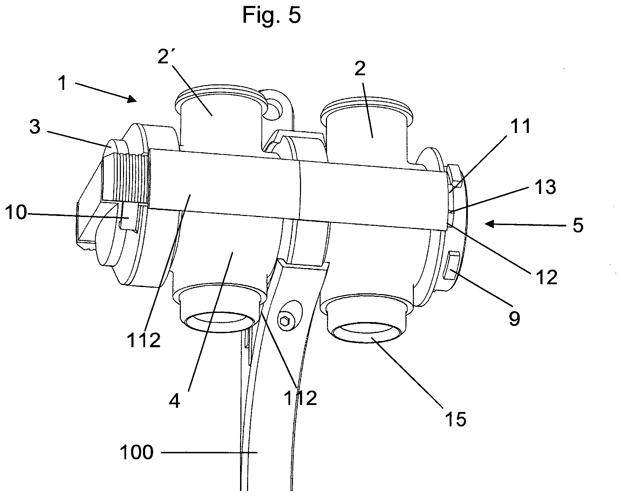

Im Bereich des weiblichen Elements ist innen am Segmentkörper 4 ein Sicherungselement 10 angeordnet. In der dargestellten Ausführungsform ist das Sicherungselement 10 als Rastelement 10 ausgebildet. An der gegenüber liegenden Seite des Segmentkörpers 4 ist an dem männlichen Element 9 angeordnet ein als Rastaufnahme 11 ausgebildetes Aufnahmeelement 11 einstückig an den Segmentkörper 4 angeformt. Die Rastaufnahme 11 ist als an den Segmentkörper 4 angeformte, flexible Federzunge 11 ausgebildet, deren freies Ende eine Einführungsschräge 12 aufweist. An die Einführungsschräge 12 schließt sich an der Rastaufnahme 11 ein bevorzugt als Rücksprung 13 oder Stufe ausgebildetes Sperrelement 13 an. Der Rastaufnahme 11 diametral gegenüberliegend kann eine weitere Rastaufnahme angeordnet sein, die zu zur Rastaufnahme 11 identisch aufgebaut ist. Am Segmentkörper 4 ist ein Betätigungselement 111 angeordnet, das mit dem als Rastaufnahme ausgebildeten Aufnahmeelement 11 verbunden ist. Wird das Betätigungselement 111 in Richtung auf den Segmentkörper 4 gedrückt, bewegt sich das Aufnahmeelement 11 dadurch in Richtung des männlichen Elements 9 der Bajonettverbindung, so dass diese entriegelt wird und damit geöffnet werden kann. In der Darstellung gemäß Fig. 5 ist das Betätigungselement 111 des Segmentkörpers 4 durch ein mit dem Segmentkörper 4 verbundenes, insbesondere darauf aufgestecktes oder damit verrastetes Abdeckelement 112 verdeckt und damit vor einer ungewollten Betätigung geschützt. In der dargestellten Ausführungsform erstecken sich sowohl das das Betätigungselement 111 als auch das Abdeckelement 112 in axialer Richtung über die gesamte Länge des Segmentkörpers 4. Dadurch entsteht am erfindungsgemäßen modularen Fluidverteiler 1 eine sich über dessen gesamte Länge in axialer Richtung erstreckende Leiste als zusätzliches Designelement (Fig. 5). Die Abdeckelemente 112 des erfindungsgemäßen modularen Fluidverteilers 1 sind bevorzugt im farblichen Kontrast zu den Segmentkörpern 4 der Verteilersegmente 21, 22 ausgebildet. In der dargestellten Ausführungsform ist die vom Segmentkörper 4 wegweisende Seite des Abdeckelements 112 als Beschriftungsfeld ausgebildet, auf dem beispielsweise der Raum benannt werden kann, der über den Heizkreis geheizt und/oder gekühlt wird, der dem jeweiligen Verteilersegment 2, 2' zugeordnet ist.

In besonders bevorzugten Ausführungsformen des erfindungsgemäßen modularen Fluidverteilers 1 hintergreift das Abdeckelement 112 das Betätigungselement 111, wenn das das Betätigungselement 111 mit dem Segmentkörper 4 verbunden wird. Dadurch wird das Drücken des Betätigungselements 111 in Richtung des Segmentkörpers zusätzlich unterbunden, so dass dann ein ungewolltes Lösen der Verbindung zwischen den beiden Verteilersegmenten praktisch ausgeschlossen ist.

Orthogonal zum Durchflusskanal 5 weist der Segmentkörper 4 zwei weitere, einander gegenüberliegende Öffnungen 14, 15 auf, wobei die Öffnung 14 zur dichtenden Aufnahme eines Ventils oder eines Durchflussmessers, insbesondere über eine Steck- oder Schraubverbindung, dient, während die Öffnung 15 zum Anschluss des Rohres eines Heiz- und/oder Kühlkreises dient. Der Rohranschluss an die Verteilersegmente 2, 2' erfolgt vorzugsweise über eine Steck-, Schraub-, Press- oder Schiebehülsenverbindung.

Zur Herstellung der Verteilersegmente 2, 2' und der Abschlusselemente des erfindungsgemäßen modularen Fluidverteilers 1 hat sich Spritzguß als bevorzugte Art der Herstellung erwiesen. Polyvinylchlorid (PVC), Polyethylen (insbesondere HDPE), Polyamid (PA; insbesondere Polyamid-6 und Polyamid-6,6) und Polypropylen (insbesondere statistisches Polypropylen PP-R) sowie Blends der genannten Polymermaterialien dienen als bevorzugte Materialien für die Verteilersegmente 2, 2' und die Abschlusselemente des erfindungsgemäßen modularen Fluidverteilers 1, wobei jeweils auch faserverstärkte, insbesondere glasfaserverstärkte Ausführungen der genannten Polymermaterialien und Blends zum Einsatz kommen können. Die männlichen und/oder weiblichen Elemente können als metallische Einleger, insbesondere aus Rotguss oder Edelstahl, in die entsprechenden Spritzgussformen eingelegt werden, alternativ aber auch aus demselben Material wie die jeweiligen Segmentkörper 4 und einstückig mit diesen ausgebildet sein. In der dargestellten Ausführungsform sind die Segmentkörper 4 sowie die Abschlusselemente aus glasfaserverstärktem Polyamid-6 spritzgegossen, wobei die jeweiligen männlichen und/oder weiblichen Elemente aus demselben Material aufgebaut sind und einstückig mit den jeweiligen Segmentkörpern 4 verbunden sind.

Zum Schließen der Bajonettverbindung zwischen zwei Verteilersegmenten 2, 2' wird zunächst das männliche Element 9 eines Verteilersegments 2' in die Nähe des weiblichen Elements des anderen Verteilersegments 2 gebracht, bis das männliche Element 9 des Verteilersegments 2' in das weibliche Element des Verteilersegments 2 eindringt. Dann werden die beiden Verteilersegmente 2, 2' gegeneinander verdreht. Dabei gelangt das Sicherungselement 10 des Verteilersegments 2 an die Einführungsschräge 12 der Federzunge 11 des anderen Verteilersegments 2'. Bei weiterem Verdrehen läuft das Rastelement 10 entlang der Einführungsschräge 12 der Federzunge 11 und drückt diese nach unten, bis das Sicherungselement 10 die Einführungsschräge 12 überwunden hat und mit der Rastaufnahme 11 verrastet. Gleichzeitig verdrehen sich das männliche Element 9 des Verteilersegments 2'und das weibliche Element des anderen Verteilersegments 2 gegeneinander, wodurch die Bajonettverbindung zwischen den beiden Verteilersegmente 2, 2' geschlossen wird. Nach dem Verrasten gelangt das als Federzunge 11 ausgebildete Aufnahmeelement 11 aufgrund seiner Federwirkung in seine Ausgangsposition zurück, so dass das als Rücksprung 13 ausgebildete Sperrelement 13 ein Zurückdrehen der beiden Verteilersegmenten 21, 22 gegeneinander in entgegengesetzter Richtung verhindert. Die beiden miteinander fest verbundenen Verteilersegmente 2, 2' sind in Fig. 2 dargestellt, wobei das Betätigungselement 111 der Verteilersegmente 2, 2' jeweils durch eine Abdeckelement 112 verdeckt ist. In Verbindungsbereich der Verteilersegmente 2, 2' ist der aus den Verteilersegmenten 2, 2' und dem Abschlusselement 3 gebildete, erfindungsgemäße modulare Fluidverteiler 1 unter zweifachem Formschluss in den Aufnahmebereich einer geeigneten Wandhalterung 100 aufgenommen.

Zum Lösen der Bajonettverbindung zwischen den Verteilersegmenten 2, 2' wird die Federzunge 11 des Verteilersegments 2 durch Drücken des Betätigungselement 111 in Richtung des Segmentkörpers 4 nach unten gedrückt und die beiden Verteilersegmente 2, 2' in entgegengesetzter Richtung gegeneinander verdreht. Daraufhin können die Verteilersegmenten 2, 2' voneinander gelöst werden.

In entsprechender Weise können die Abschlusselemente 3 an die Verteilersegmente 2, 2' angefügt oder von diesen gelöst werden.

Die vorliegende Erfindung wurde unter Bezugnahme auf die in den Figuren gezeigten Ausführungsformen im Detail erläutert. Es versteht sich jedoch, dass die vorliegende Erfindung nicht auf diese Ausführungsformen beschränkt ist.

## Patentansprüche

1. Modularer Fluidverteiler (1) für ein Heiz- und/oder Kühlsystem, der mindestens zwei Verteilersegmente (2, 2', 2", 2"') sowie zwei Abschlusselemente (3, 3') umfasst, wobei die Verteilersegmente (2, 2', 2", 2"') jeweils einen fluiddichten Segmentkörper (4) umfassen, der einen Durchflusskanal (5) zum Durchströmen eines Wärmeträgermediums und zwei einander gegenüberliegende Kanalöffnungen (6, 7) aufweist, wobei der Segmentkörper (4) im Bereich der Kanalöffnungen (6, 7) Verbindungselemente (8, 9) zur Erzeugung einer Verbindung zwischen zwei Verteilersegmenten (2, 2', 2", 2"') oder zwischen einem Verteilersegment (2, 2"') und einem Abschlusselement (3, 3') umfasst, wobei die Verteilersegmente (2, 2', 2", 2"') im Bereich eines der Verbindungselemente (8) mindestens ein Sicherungselement (10, 10') aufweisen, das mit einem Aufnahmeelement (11, 11') im Bereich des anderen Verbindungselement (9) eines anderen Verteilersegments (2, 2', 2", 2"') reversibel in Eingriff bringbar ist,
**dadurch gekennzeichnet, dass**
das Aufnahmeelement (11, 11') als Federelement (11, 11'), insbesondere als Federzunge (11, 11'), ausgebildet ist.

2. Modularer Fluidverteiler (1) für ein Heiz- und/oder Kühlsystem nach Anspruch 1,
**dadurch gekennzeichnet, dass** das Sicherungselement (10, 10') als Rastelement (10, 10') ausgebildet ist, das mit einer entsprechenden Rastaufnahme (11, 11') eines anderen Verteilersegments (2, 2', 2", 2"') reversibel in Eingriff bringbar ist.

3. Modularer Fluidverteiler (1) für ein Heiz- und/oder Kühlsystem nach Anspruch 1 oder Anspruch 2, **dadurch gekennzeichnet, dass** das Aufnahmeelement (11, 11') mit einer Einführungsschräge (12) versehen ist.

4. Modularer Fluidverteiler (1) für ein Heiz- und/oder Kühlsystem nach Anspruch 3,
**dadurch gekennzeichnet, dass** sich am Aufnahmeelement (11, 11') an die Einführungsschräge (12) ein Sperrelement (13) anschließt.

5. Modularer Fluidverteiler (1) für ein Heiz- und/oder Kühlsystem nach Anspruch 4,
**dadurch gekennzeichnet, dass** das Sperrelement (13) als Rücksprung (13) ausgebildet ist.

6. Modularer Fluidverteiler (1) für ein Heiz- und/oder Kühlsystem nach einem der voranstehenden Ansprüche, **dadurch gekennzeichnet, dass** das Verteilersegment (2, 2', 2", 2"') zwei Sicherungselemente (10, 10') umfasst, die einander vorzugsweise entlang des Außenumfangs des Verteilersegments (2, 2', 2", 2"') diametral gegenüber liegen.

7. Modularer Fluidverteiler (1) für ein Heiz- und/oder Kühlsystem nach Anspruch 6,
**dadurch gekennzeichnet, dass** das Verteilersegment (2, 2', 2", 2"') zwei Aufnahmeelemente (11, 11') umfasst, die einander vorzugsweise entlang des Außenumfangs des Verteilersegments (2, 2', 2", 2"') diametral gegenüber liegen und jeweils mit den einander diametral gegenüber liegenden Sicherungselementen (10, 10') eines anderen Verteilersegment (2, 2', 2", 2"') in Eingriff bringbar sind.

8. Modularer Fluidverteiler (1) für ein Heiz- und/oder Kühlsystem nach einem der voranstehenden Ansprüche, **dadurch gekennzeichnet, dass** das Aufnahmeelement (11, 11') am Segmentkörper (4) betätigbar ausgebildet ist, wobei das Aufnahmeelement (11, 11') über ein an der Außenseite des Segmentkörpers (4) angeordnetes Betätigungselement (111) betätigbar ist.

9. Modularer Fluidverteiler (1) für ein Heiz- und/oder Kühlsystem nach Anspruch 8,
**dadurch gekennzeichnet, dass** das Betätigungselement (111) über ein Abdeckelement (112) verdeckbar ist, das mit dem Segmentkörper (4) in Eingriff bringbar ist.

10. Modularer Fluidverteiler (1) für ein Heiz- und/oder Kühlsystem nach Anspruch 9,
**dadurch gekennzeichnet, dass** sich das Abdeckelement (112) in axialer Richtung über die gesamte Länge des Segmentkörpers (4) erstreckt.

11. Modularer Fluidverteiler (1) für ein Heiz- und/oder Kühlsystem nach Anspruch 9 oder Anspruch 10, **dadurch gekennzeichnet, dass** das Abdeckelement (112) als ein Beschriftungsfeld ausgebildet ist oder ein Beschriftungsfeld umfasst.

## Claims

1. A modular fluid manifold (1) for a heating and/or cooling system, comprising at least two manifold segments (2, 2', 2", 2"') and two terminal elements (3, 3'), wherein the manifold segments (2, 2', 2", 2"') each comprise a fluid-tight segment body (4) that has a through-flow duct (5) through which a heat transfer medium can be made to flow and two mutually opposite duct openings (6, 7), wherein the segment body (4) comprises, in the region of the duct openings (6, 7), connecting elements (8, 9) for establishing a connection between two manifold segments (2, 2', 2", 2"') or between a manifold segment (2, 2"') and a terminal element (3, 3'), wherein the manifold segments (2, 2', 2", 2"') have, in the region of one of the connecting elements (8), at least one securing element (10, 10') which can be reversibly brought into engagement with a receiving element (11, 11') in the region of the other connecting element (9) of another manifold segment (2, 2', 2", 2"'),
**characterised in that**
the receiving element (11, 11') is configured as a spring element (11, 11'), in particular a spring tongue (11, 11').

2. The modular fluid manifold (1) for a heating and/or cooling system according to claim 1, **characterised in that** the securing element (10, 10') is configured as a latching element (10, 10') which can be reversibly brought into engagement with a corresponding latching receptacle (11, 11') of another manifold segment (2, 2', 2", 2"').

3. The modular fluid manifold (1) for a heating and/or cooling system according to claim 1 or claim 2, **characterised in that** the receiving element (11, 11') is provided with an insertion slope (12).

4. The modular fluid manifold (1) for a heating and/or cooling system according to claim 3, **characterised in that** on the receiving element (11, 11') the insertion slope (12) is followed by a locking element (13).

5. The modular fluid manifold (1) for a heating and/or cooling system according to claim 4, **characterised in that** the locking element (13) is configured as a recess (13).

6. The modular fluid manifold (1) for a heating and/or cooling system according to one of the preceding claims, **characterised in that** the manifold segment (2, 2', 2", 2"') comprises two securing elements (10, 10'), which are preferably diametrically opposite each other along the outer circumference of the manifold segment (2, 2', 2", 2"').

7. The modular fluid manifold (1) for a heating and/or cooling system according to claim 6, **characterised in that** the manifold segment (2, 2', 2", 2"') comprises two receiving elements (11, 11'), which are preferably diametrically opposite each other along the outer circumference of the manifold segment (2, 2', 2", 2"') and can each be brought into engagement with the mutually diametrically opposite securing elements (10, 10') of another manifold segment (2, 2', 2", 2"').

8. The modular fluid manifold (1) for a heating and/or cooling system according to one of the preceding claims, **characterised in that** the receiving element (11, 11') is configured such that it can be actuated on the segment body (4), wherein the receiving element (11, 11') can be actuated by means of an actuating element (111) arranged on the outside of the segment body (4).

9. The modular fluid manifold (1) for a heating and/or cooling system according to claim 8, **characterised in that** the actuating element (111) can be covered by means of a covering element (112), which can be brought into engagement with the segment body (4).

10. The modular fluid manifold (1) for a heating and/or cooling system according to claim 9, **characterised in that** the covering element (112) extends in an axial direction over the entire length of the segment body (4).

11. The modular fluid manifold (1) for a heating and/or cooling system according to claim 9 or claim 10, **characterised in that** the covering element (112) is configured as a labelling field or comprises a labelling field.

## Revendications

1. Distributeur de fluide (1) modulaire pour un système de chauffage et/ou de refroidissement, qui comprend au moins deux segments de distributeur (2, 2', 2", 2"') ainsi que deux éléments de terminaison (3, 3'), dans lequel les segments de distributeur (2, 2', 2", 2"') comprennent respectivement un corps de segment (4) étanche aux fluides, qui présente un canal de passage (5) servant au passage d'un flux de milieu caloporteur et deux ouvertures de canal (6, 7) opposées l'une à l'autre, dans lequel le corps de segment (4) comprend, dans la zone des ouvertures de canal (6, 7), des éléments de liaison (8, 9) servant à générer une liaison entre deux segments de distributeur (2, 2', 2", 2'") ou entre un segment de distributeur (2, 2"') et un élément de terminaison (3, 3'), dans lequel les segments de distributeur (2, 2', 2", 2"') présentent dans la zone d'un des éléments de liaison (8) au moins un élément de sécurité (10, 10'), qui peut être amené en prise de manière réversible avec un élément de logement (11, 11') dans la zone de l'autre élément de liaison (9) d'un autre segment de distributeur (2, 2', 2", 2"'),
**caractérisé en ce que**
l'élément de logement (11, 11') est réalisé sous la forme d'un élément élastique (11, 11'), en particulier sous la forme d'une languette élastique (11, 11').

2. Distributeur de fluide (1) modulaire pour un système de chauffage et/ou de refroidissement selon la revendication 1, **caractérisé en ce que** l'élément de sécurité (10, 10') est réalisé sous la forme d'un élément d'enclenchement (10, 10'), qui peut être amené en prise de manière réversible avec un logement d'enclenchement (11, 11') respective d'un autre segment de distributeur (2, 2', 2", 2'").

3. Distributeur de fluide (1) modulaire pour un système de chauffage et/ou de refroidissement selon la revendication 1 ou la revendication 2, **caractérisé en ce que** l'élément de logement (11, 11') est pourvu d'un biseau d'introduction (12).

4. Distributeur de fluide (1) modulaire pour un système de chauffage et/ou de refroidissement selon la revendication 3, **caractérisé en ce qu'**un élément de blocage (13) se raccorde au niveau de l'élément de logement (11, 11') au biseau d'introduction (12).

5. Distributeur de fluide (1) modulaire pour un système de chauffage et/ou de refroidissement selon la revendication 4, **caractérisé en ce que** l'élément de blocage (13) est réalisé sous la forme d'un retrait (13).

6. Distributeur de fluide (1) modulaire pour un système de chauffage et/ou de refroidissement selon l'une quelconque des revendications précédentes, **caractérisé en ce que** le segment de distributeur (2, 2', 2", 2'") comprend eux éléments de sécurité (10, 10'), qui sont diamétralement opposés l'un à l'autre de préférence le long de la périphérie extérieure du segment de distributeur (2, 2', 2", 2'").

7. Distributeur de fluide (1) modulaire pour un système de chauffage et/ou de refroidissement selon la revendication 6, **caractérisé en ce que** le segment de distributeur (2, 2',2", 2"') comprend deux éléments de logement (11, 11'), qui sont de préférence diamétralement opposés l'un à l'autre le long de la périphérie extérieure du segment de distributeur (2, 2', 2", 2'") et peuvent être amenés en prise respectivement avec les éléments de sécurité (10, 10') diamétralement opposés les uns aux autres d'un autre segment de distributeur (2, 2', 2", 2'").

8. Distributeur de fluide (1) modulaire pour un système de chauffage et/ou de refroidissement selon l'une quelconque des revendications précédentes, **caractérisé en ce que** l'élément de logement (11, 11') est réalisé de manière à pouvoir être actionné au niveau du corps de segment (4), dans lequel l'élément de logement (11, 11') peut être actionné par l'intermédiaire d'un élément d'actionnement (111) disposé au niveau du côté extérieur du corps de segment (4).

9. Distributeur de fluide (1) modulaire pour un système de chauffage et/ou de refroidissement selon la revendication 8, **caractérisé en ce que** l'élément d'actionnement (111) peut être caché par l'intermédiaire d'un élément de recouvrement (112), qui peut être amené en prise avec le corps de segment (4).

10. Distributeur de fluide (1) modulaire pour un système de chauffage et/ou de refroidissement selon la revendication 9, **caractérisé en ce que** l'élément de recouvrement (112) s'étend dans une direction axiale sur toute la longueur du corps de segment (4).

11. Distributeur de fluide (1) modulaire pour un système de chauffage et/ou de refroidissement selon la revendication 9 ou la revendication 10, **caractérisé en ce que** l'élément de recouvrement (112) est réalisé sous la forme d'un champ d'inscription ou comprend un champ d'inscription.
